# EUROPEAN PATENT SPECIFICATION

(11) **EP 0 545 472 B1**
(45) Date of publication and mention of the grant of the patent: **20.10.1999**
(21) Application number: 92203643.9
(22) Date of filing: 25.11.1992
(51) Int. Cl.: G11B 20/00, G11B 7/007, G11B 7/013

(54) **Closed information system with physical copy protection**
Geschlossenes Informationssystem mit Kopierschutz
Système d'information fermé avec protection de copie

(30) Priority: 02.12.1991 EP 91203147
(43) Date of publication of application: 09.06.1993
(60) Divisional application: 99200856.5
(73) Proprietor: Koninklijke Philips Electronics N.V., 5621 BA Eindhoven (NL)
(72) Inventor: Timmermans, Jozef Maria Karel, NL-5656 AA Eindhoven (NL); Schylander, Erik Christian, NL-5656 AA Eindhoven (NL); Mons, Johannes Jan, NL-5656 AA Eindhoven (NL)
(74) Representative: Groenendaal, Antonius Wilhelmus Maria

(56) References cited:
- EP-A- 325 330
- EP-A- 441 967
- EP-A- 0 299 573
- EP-A- 0 342 748
- EP-A- 0 404 249
- US-A- 4 849 836
- PATENT ABSTRACTS OF JAPAN vol. 10, no. 312 (P-509)(2368) 23 October 1986
- PATENT ABSTRACTS OF JAPAN vol. 10, no. 389 (P-531)26 December 1986

## Description

The invention relates to an information recovery system, comprising a record carrier exhibiting first variations of a first physical parameter of said record carrier, said first variations corresponding to information recorded on said record carrier, and second variations of a second physical parameter of said record carrier, said second variations exhibiting a variation pattern said second physical parameter differing from said first physical parameter; and a playback apparatus having a transducer for scanning said record carrier, said transducer being adapted to detect said first variations and said second variations, detection means for detecting the second variations of the second physical parameter on the basis of a detection signal received from the transducer, and recovery means that are coupled to said transducer for recovering the information from said first variations.

The invention further relates to a play-back apparatus for use in the system.

A system of the type mentioned above is inter alia known as the Compact-Disc system. Normal Compact Discs play on all compatible playback apparatuses. Nowadays recording apparatus are available for copying the information present on a read-only Compact Disc on a recordable disc which can be played on the compatible play-back apparatus.

However some applications , for example audio-visual games, require a so-called "closed system" in which the Compact Disc with the software representing the audio-visual game can only be played on special players and which cannot be copied easily by means of the available recording apparatuses.

In the view of cost price aspects it is desired that know-how of the already existing information systems can be used as much as possible. Therefor it is desired to amend existing information systems as less as possible in order to realize a low-cost "closed information system".

However it should be made very difficult for third parties to copy such special discs by means of existing copying machines.
The prior art protection schemes do not meet this requirement, e.g.
- rate scrambling/encryption can by copied from disc to disc with a bit copying machine;
- special logical errors (to copy protect) in a main and/or subcode channel (of e.g. a Compact Disc) can also be copied with a bit copying machine;
- schemes relying on the relation main/subcode channel can also be copied with a bit copying machine.

EP-A-299573 discloses an information recovery system as defined in the preamble of claim 1 and comprising a record carrier on which information may be recorded in a track in the form of optical detectable marks, which track exhibits a prerecorded track undulation, which undulation is modulated by a position-information signal. During recording the modulation is detected and the position-information is recovered for indicating the track portion in which the information is recorded.

Further JP-A-61 123026 describes a type of copy protection, in which an apparatus discriminates between two types of pits recorded on a record carrier, i.e. true pits representing information and dummy pits, all pits being formed by depth variations and dummy pits having other depths than true pits, which apparatus deforms the output signal when the dummy pit does not exist in a position where it should exist.

An object of the invention is to provide a closed information system in which record carriers are used which can be copied less easily.

According to the invention this object is achieved by an information system as defined in the opening paragraph and which is characterized in that the detection means are adapted for recovering a code represented by said variation pattern and in that the playback apparatus further comprises enabling means arranged to enable said recovery means to recover the information in dependence on said code.

Due to the fact that a bit copying machine usually only copies the variations of the first physical parameter (which variations represent the information recorded) the variations in the second physical parameter are not copied. Consequently the special discs cannot be copied by the usual type of bit copying machines.

An embodiment of the information system according to the invention is characterized in that the second variations exhibit a modulation pattern representing a code, that the detection means comprise demodulation means for recovering the said code from the detection signal and means for activating the enabling means in response to the recovery of said code.

The use of a modulation of the variation has the advantage that the presence of the variations of the second physical parameter can be detected more reliably.

An further embodiment of the information system is characterized in that the information recorded is of a type which is recoverable by means of a predetermined data processing, the code represented by the modulation pattern of the second variations indicating the type of data processing to be used for recovering the information, the apparatus being provided with means for setting the recovery means in a mode in which the predetermined data processing indicated by the code recovered is performed.

This embodiment has the advantage that for recovering the information read from the record carrier it is required that the code represented by the modulation pattern is available. So the information can only be recorded by a dedicated play-back apparatus, which is able to recover the code. In the event that the information is encrypted or scrambled before it is recorded on the record carrier the code preferably indicate the encryption key or the scramble method respectively.

Although not limited to information system in which optically readable record carrier are used, the system is in particular suitable for this type of information systems.

In an optical record carrier it is relatively simple to provide the track in which the information has been recorded with a track modulation which can be detected by the same radiation beam as used for reading the information.

An embodiment of the information system in which this is realized, is characterized by servo control means for controlling the scanning in order to control at least one scanning parameter to a predetermined value on the basis of a detection signal received from the radiation sensitive detector and which is affected by said second physical parameter, which servo control means having a predetermined frequency bandwidth, said variations of said second physical parameter cause variations in the detection signal which exhibit a frequency spectrum which is located outside the bandwidth of servo control means and outside the frequency spectrum of the signal variations caused by the variations of the first physical parameter.

The variations in the second physical parameter can be in the form of variations in the track position in a direction transverse to the track direction. These variations can be detected on the basis of the tracking error signal.

The variations in the second physical parameter can be in the form of a variation in the position of the plane in which the optically readable marks are located. In that event the variation can be detected on the basis of the focus error signal.

The variations in the second physical parameter can also be in the form of a variation in the mean value of the optical readable marks and the intermediate areas located between the optically readable marks. In that event the variations in the second physical parameter can be detected on the basis of variations in the data clock signal recovered during the scanning of the track with a constant linear velocity.

In the event that the record carrier used in the information system is a Compact Disc it is preferred to use an information system which is characterized in that the variations in the second physical parameter result in a variation in the detection signal with a frequency substantially corresponding to 22 kHz in the event that the track is scanned with a scanning speed between 1.2 to 1.4 meter per second.

This embodiment has the advantage that it is impossible to copy the special disc on an usual recordable Compact Disc which is provided with a pregroove which exhibits a wobble which results in a tracking error with a frequency of substantial 22 kHz when the pregroove is scanned with a velocity between 1.2 and 1.4 meter per second.

Even in the event that it succeeds to record a wobbling pattern of recording marks which corresponds to the wobbling recording marks of the record carrier to be copied, this pattern will not be detectable because of the presence of the wobbling pregroove which is situated in the same frequency range.

Embodiments of the invention will now be described in more detail, by way of example, with reference to Figures 1 to 9, wherein
Figures 1, 2 and 3 show embodiments of record carriers for use in the information system according to the invention,
Figures 4 and 5 show embodiments of the information system according to the invention,
Figure 6 show the positions of the frequency spectra of different signals with respect to one another, and
Figures 7 and 8 show embodiments of detection circuits for use in the information system as shown in figure 5.

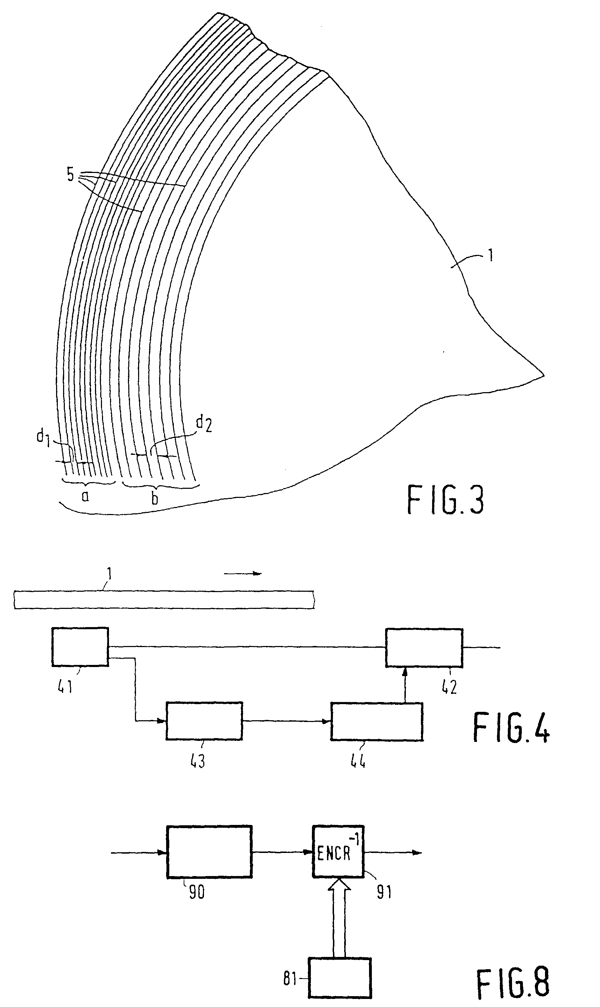

Figure 4 shows an embodiment of the information system in accordance of the invention. The information system comprises means (not shown) to move a record carrier 1 along a transducer 41, so as to cause a scanning of the record carrier 1. The record carrier exhibits variations of a first physical parameter, which variations represent information recorded on the record carrier 1. The transducer 41 is of a type that is responsive to said variations in said first physical parameter. An information recovery circuit 42 is coupled to an output of the transducer 41 for receiving a detection signal corresponding with the variations of the first physical parameter on the scanned part of the record carrier 41. The information recovery circuit is of an usual type that recovers the information from the said detection signal received.

The record carrier 1 further exhibits a variation of a second physical parameter, which does not represent the information represented by the variations of the first physical parameter. Which second variations, however are also detectable by the transducer 41. The transducer supplies to a detection circuit 43 a signal corresponding with the variations in the second physical parameter detected by the transducer 41. The detection circuit 43 supplies to a control circuit 44 a control signal indicating whether the detection signal received comprises signal parts which corresponds with predetermined variations of the second physical parameter. In response to the receipt of a control signal indicating that the detection signal comprises parts corresponding to said predetermined variations the control circuit 44 supplies to the information recovery circuit 42 an enabling signal for enabling the information recovery. So only in the event that the presence of said variation in said second physical parameter is detected the information recorded on the disc will be recovered. The information recorded on a copy of the record carrier, which copy only exhibits the variations in the first physical parameter, representing the information, can not be recovered.

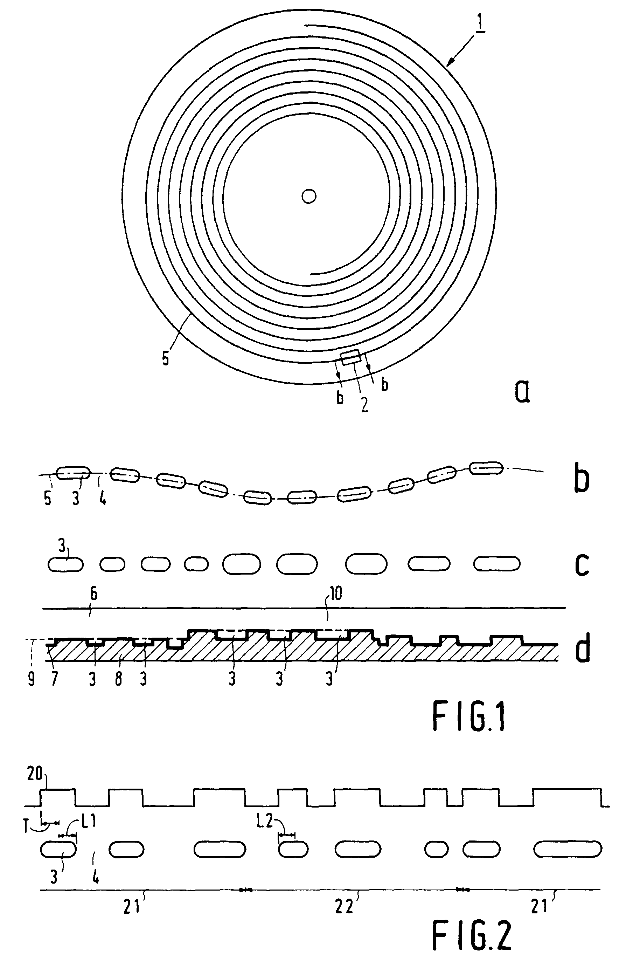

Figure 1 shows possible embodiments of a record carrier 1 for use in the information system in accordance with the invention, Figure 1a being a plan view, Figure 1b and 1c being highly enlarged plan views of a part 2 of a first and second embodiment of the record carrier 1, and Figure 1d showing a small part of a sectional view of the part 2 along a line b-b of a third embodiment of the record carrier 1.

In the embodiment of the record carrier 1 shown in Figure 1b the variations in first physical parameter have the form of optical detectable marks 3 which alternate with intermediate areas 4. The optically detectable marks may be in the form of so-called pits. However also other type of optically detectable marks are suitable. The optically detectable marks are arranged along a track of which the centre line is indicated by a reference sign 5. In this embodiment the variation in the second physical parameter is a variation of the track position in a direction transverse to the track direction. This position variation has the form of a track undulation, also known as a radial track wobble. Such track wobble can easily be detected by the same beam scanning means as used for the detection of the optically detectable marks 3 as will be discussed in an other part of the description.

In the embodiment shown in Figure 1c the variations of the second physical parameter has the form of variations of the width of the optical detectable marks 3. The variations in the width of marks 3 result in a additional intensity modulation in a radiation beam scanning the track. Both the variations in the width of the marks 3 and the information can be recovered on the basis of the intensity modulation, provided that the frequency spectrum of the component caused by the pattern of marks does not overlap the frequency spectrum of the component caused by the mark width variations.

In Figure 1d the reference sign 6 indicates a transparent substrate. The substrate 6 is covered wit a reflective layer 7. The reflective layer 7 is covered by a protective layer 8. The substrate 6 is provided with optically detectable marks 3 in the form of pits. The variations in the second parameter are in the form of the variations of the position of the plane in which optically detectable marks 3 are situated. In Figure 1d different positions of these planes are indicated by lines 9 and 10. When scanning the pattern as shown in Figure 1d with a focused radiation beam the variations in the plane of the marks 3 result in a focus error which can be detected easily.

Figure 2 shows the pattern of optically marks 3 and intermediate areas 4 for a fourth embodiment of the record carrier 1 for use in the information system according to the invention. The lengths of the marks 3 and the intermediate areas 4 correspond with a plurality (including one) of bit cells of a signal 20 read from the record carrier. In figure 2 this signal 20 is shown for the event that the pattern of marks 3 and areas 4 is scanned with a constant linear velocity. The length T of a bit cell corresponds with the period T of the data clock of the signal. In the track parts indicated by reference sign 21 a bit cell is represented by a track part with a length L1, whilst in the track part indicated by reference sign 22 a bit cell is represented by a track part with a length L2, which is shorter than length L1. In other words the mean length of the marks 3 and areas 4 for the track parts 21 differs from the mean length of the marks 3 and areas 4 in the track parts 22. In the event that the track is scanned with a constant linear velocity and the data clock is recovered from the signal 20 read, the variation in the mean value of the length of the marks 3 and areas 4 results in a variation of the frequency of the recovered data clock.

Figure 3 shows a fifth embodiment of a record carrier for use in the information system according to the invention. In this embodiment the tracks are divided in groups a and b. The track pitch d1 in group a as well as the track pitch d2 of the tracks in group b is constant within the respective group. The track pitch d2, however, is greater than the track pitch d1. This difference in track pitch can be easily detected when the tracks are scanned by a radiation beam as is described in detail in GB-PS 1,516,285. The presence of the variations in the track pitch can be easily detected when a scanning beam is moved in radial direction over the record carrier 1.

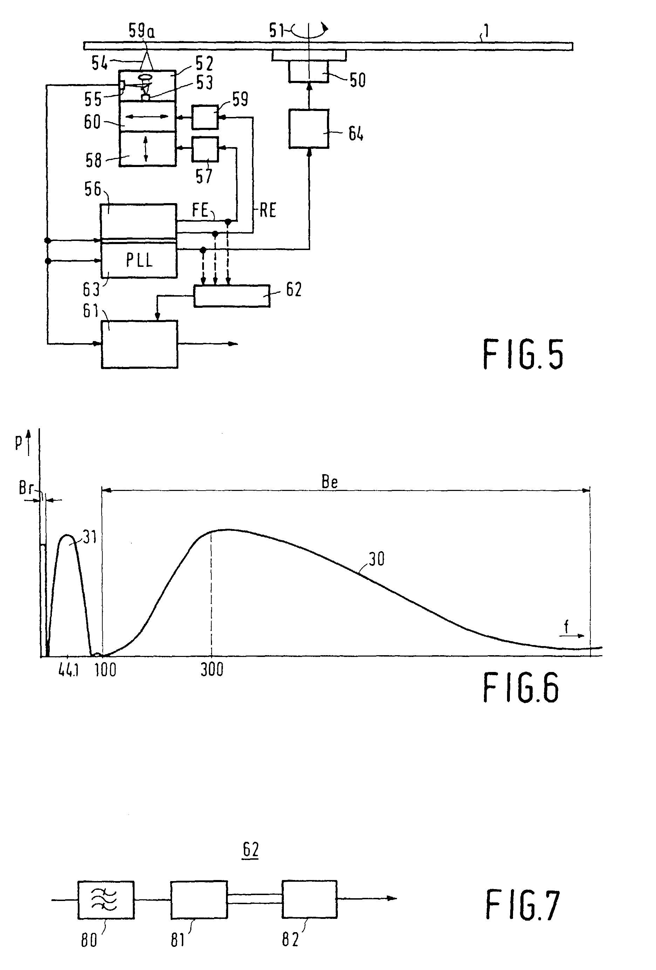

Figure 5 shows an embodiment of an optical information system in accordance with the invention in more detail.

The system is provided with a rotating drive motor 50 mechanically coupled with the record carrier 1 so as to cause a rotation of the record carrier about an axis 51. In doing so the record carrier is moved along a transducer in the form of an optical read head 52 of an usual type. The optical head 52 comprises a radiation source 53 for example in the form of a semiconductor laser for generating a laser beam 54. The beam 54 is directed by an optical system of an usual type to a radiation sensitive detector 55 via the record carrier 1. The laser beam is modulated in accordance with the variations of the first and second parameter. These modulations are detected by the detector 55 and detection signals corresponding to these modulations are available on output of the detector 55. The detection signals on the output of the detector 55 are supplied to a circuit 56 of a usual type which derives a focus error signal FE and an tracking error signal RE from these detection signals. The focus error signal FE is supplied to a focus control circuit 57 which derives from this focus error signal an energizing signal for an focus actuator 58 such that a focal point 59 of the beam 54 is maintained in a plane of the record carrier in which the optically detectably marks 3 are located. The detector 55 the circuit 56 the focus control circuit 57 and the focus actuator form a focus servo system of an usual type.

The tracking error signal RE is supplied to a tracking control circuit 59 which derives from the tracking error signal RE an energizing signal for a tracking actuator 60 arranged to move the beam 54 in radial direction in response to the energizing signal so as to maintain the beam substantially directed to the centre of the track 5. The detector 55, the circuit 56 and the tracking control circuit form a tracking servo system of usual type. The detection signals on the output of the detector are also supplied to an information recovery circuit 61 .

Further the playback apparatus is provided with scanning velocity control means for maintaining the scanning velocity on a substantial constant value. The scanning velocity control means may comprise a circuit 63, for example a phase locked loop circuit of an usual type, for recovering the data clock from the detection signals on the output of the detector 55. The frequency of the data clock is a measure for the scanning velocity. A signal indicating the data clock frequency is supplied to a motor control circuit 64 for energizing the motor 50 such that the frequency of the recovered data clock is maintained on a substantial constant value. It is to be noted that the scanning velocity servo system can also be realised in other manners, for example as often realized in compact disc players on the basis of the filling grade of a so-called FIFO-buffer in which the information read out is temporarily stored.

In the event that the record carrier 1 is of the type as shown in Figure 1b the tracking error signal exhibit a signal component which is caused by the radial wobble. For a detailed explanation of this phenomena reference is made to EP-A-0,2-99,573 and EP-A-0,325,330. The frequency of the radial wobble should be selected such that the frequency of the signal component caused by the wobble is situated outside the bandwidth of the tracking servo loop and outside the frequency spectrum of the information. Figure 6 shows as illustration the position of the frequency spectrum 31 of the signal component caused by the radial wobble situated between the bandwidth 32 of the tracking servo and the frequency spectrum 30 of the information recorded on the record carrier.

The signal component in the tracking error signal RE caused by the radial wobble is detected by a detection circuit 62. This detection circuit 62 may be of a type as disclosed in detail in the documents EP-A-0,299,573 and EP-A-0,325,330.

Instead of a radial wobble with a constant frequency and constant amplitude radial wobbles are used which exhibit a modulation which represent a code. Such modulation may be of a type as for example as disclosed in EP-A-0,299,573 or a FM-modulation as disclosed in EP-A-0,325,330.

In the event that a modulated radial wobble is used the detection circuit 62 may be of a type as disclosed in the said EP-documents. Figure 7 shows in principle such type of detection circuit 62. This detection circuit comprises a band pass filter 80 tuned to the frequency of the radial wobble. The input of the filter 80 is coupled to the circuit 56 so as to receive the tracking error signal RE. The output of the filter 80 is supplied to a demodulation circuit 81 for recovering the code represented by the modulated wobble. The code recovered by the demodulation circuit 81 is supplied to a comparator circuit 82 for comparing the code recovered with a predetermined code. The comparator circuit 82 is of a type that generates an enabling signal for the recovery circuit 61 in the event that the code recovered by the demodulation circuit 81 corresponds with the said predetermined code.

The information recovery circuit 61 may be of an usual type which may be enabled by means of an enabling signal.

It may be preferably to record encrypted or scrambled information on the record carrier which can only be recovered using a predetermined encryption or descrambling key code. In that event it is preferred to represent the descrambling or encryption code by the modulation of the track wobble. The information recovery circuit should then provided with a descrambling or a de-encryption circuit for deencrypt or descramble the information using the code directly received from the demodulation circuit 81. An example of such information recovery circuit is shown in Figure 8, which information recovery circuit comprises a demodulation and error correction circuit 90 of an usual type for the recovery of information which has been encoded for example in accordance with a Compact Disc standard. The output signal of the circuit 90 is supplied to a descrambling or de-encryption circuit 91 of an usual type which descrambles or de-encrypts the information in conformity of the code directly received from the demodulation circuit 81.

For copying Compact Discs often a so-called recordable Compact Disc is used which is provided with a pregroove exhibiting a radial wobble which cause a signal component in the radial error signal with a frequency which substantially corresponds with a value of 22 kHz when the record carrier is scanned with a nominal scanning velocity of 1.2 to 1.4 meter per second. Said recordable Compact Disc is in detail disclosed in EP-A-0,325,330 already mentioned.

In order to prevent that a radial wobble copied from a Compact disc with a modulate radial wobble it is preferred that the radial wobble on the compact Disc to be copied has a frequency which substantially corresponds with the frequency of the radial wobble of the pregroove on the recordable Compact Disc. In that case the frequency spectra of both wobbles overlap and the wobbles cannot be distinguished from one another any more.

The embodiments described in the preceding are suitable to be used in combination of record carriers which exhibit a track wobble as shown in figure 1b.

The same circuitry can be used in the event that a record carrier is used as shown in Figure 1d. When using that type of record carrier a signal component in the focus error signal is caused in stead of in the tracking error signal. In that case the focus error signal should be supplied to the detection circuit 62 in stead of the tracking error signal RE.

In the event that a record carrier is used of a type as shown in Figure 2 the frequency of the data clock recovered by circuit 63 exhibits variations. In that event a signal indicative of these variations in the data clock frequency should be supplied to the detection circuit 62.

The detector 55 ,the circuit 63, the motor circuit 64 and the motor 50 form a scanning velocity control system. For a proper operation the variations in the data clock frequency should be situated outside the bandwidth of the scanning velocity servo. In the preceding the invention is described for use in combination of optical information systems. However it is to be noted that in principle the invention is also applicable or other type of information systems such as magnetic information systems. In such systems a magnetic record carrier may be provided with a wobbling track. Both the magnetic information pattern and the track wobble can be detected by the same magnetic read head.

## Claims

1. An information recovery system, comprising: a record carrier (1) exhibiting:
first variations of a first physical parameter of said record carrier, said first variations corresponding to information recorded on said record carrier, and
second variations of a second physical parameter of said record carrier, said second variations exhibiting a variation pattern and
said second physical parameter differing from said first physical parameter; and a playback apparatus having:
a transducer (41;52-55) for scanning said record carrier, said transducer being adapted to detect said first variations and said second variations;
detection means (43;62;81) for detecting the second variations of the second physical parameter on the basis of a detection signal received from the transducer and;
recovery means (42;61) that are coupled to said transducer for recovering the information from said first variations,
characterized in that
the detection means (43;62;81) are adapted for recovering a code represented by said variation pattern and;
in that the playback apparatus further comprises enabling means (62;82) arranged to enable said recovery means to recover the information in dependence on said code.

2. Information recovery system as claimed in claim 1, characterized in that the second variations exhibit a modulation pattern representing a code, that the detection means comprise demodulation means (81) for recovering the said code from the detection signal and means for activating the enabling means (62,82) in response to the recovery of said code.

3. Information recovery system as claimed in claim 2, characterized in that the information recorded is of a type which is recoverable by means of a predetermined data processing, the code represented by the modulation pattern of the second variations indicating the type of data processing to be used for recovering the information, the apparatus being provided with means for setting the recovery means in a mode in which the predetermined data processing indicated by the code recovered is performed.

4. Information recovery system as claimed in one of the preceding claims, characterized in that said record carrier (1) is of an optical readable type, in which the information has been recorded as patterns of optically detectable marks (3) arranged along a track (5), and in that said transducer comprises a radiation sensitive detector (55) and means (53,58,60) for directing a radiation beam on the radiation sensitive detector via the record carrier,

5. Information recovery system as claimed in claim 4, characterized by said playback apparatus further having servo control means (57,59,64) for controlling the scanning by means of the transducer in order to control at least one scanning parameter to a predetermined value on the basis of a detection signal received from the radiation sensitive detector (55) and which is affected by said second physical parameter, which servo control means having a predetermined frequency bandwidth, said second variations of said second physical parameter cause variations in the detection signal which exhibit a frequency spectrum which is located outside the bandwidth of servo control means and outside the frequency spectrum of the signal variations caused by the first variations of the first physical parameter.

6. Information recovery system as claimed in claim 5, characterized in that said servo control means comprise tracking control means (60), the second variations of the second physical parameter being variations in track position in a direction transverse to the track direction.

7. Information recovery system as claimed in claim 5 characterized in that the servo control means comprises scanning speed control means (64,50), the second variations of the second physical parameter being the mean value of the length of the optically detectable areas and the intermediate areas, the playback apparatus comprising means (63) for data clock recovery, the detection means (62) comprises means for detecting variations in the clock frequency caused by the variation in the said mean value.

8. Information recovery system as claimed in claim 5, characterized in that the servo control means comprises focus control means (58) for maintaining a focal point of the scanning beam substantially in the plane in which the optically detectable areas and the intermediate areas are located, the second variations of the second physical parameter being variations in the position of the said plane.

9. Information recovery system as claimed in one of the claims 6, 7 or 8, characterized in that the record carrier is a Compact Disc, and that the second variations in the second physical parameter result in a variation in the detection signal with a frequency substantially corresponding to 22 kHz in the event that the track is scanned with a scanning speed between 1.2 to 1.4 meter per second.

10. A playback apparatus for recovering information from a record carrier (1) exhibiting first variations of a first physical parameter of said record carrier, said first variations corresponding to information recorded on said record carrier, and second variations of a second physical parameter of said record carrier, said second physical parameter differing from said first physical parameter, the playback apparatus comprising:
a transducer (41;52-55) for scanning said record carrier, said transducer being adapted to detect said first variations and said second variations;
detection means (43;62;81) for detecting the second variations of the second physical parameter on the basis of a detection signal received from the transducer and;
recovery means (42;61) are provided that are coupled to said transducer for recovering the information from said first variations,
characterized in that:
the detection means (43;62;81) are adapted for recovering a code represented by a variation pattern of said second variations and;
in that the playback apparatus further comprises enabling means (62;82) arranged to enable said recovery means to recover the information in dependence on said code.

11. Playback apparatus as claimed in claim 10, characterized in that the detection means comprises demodulation means (81) for recovering a code from the detection signal and means (62,82) for activating the enabling means in response to the recovery of said code.

12. Playback apparatus as claimed in claim 11, characterized in that the apparatus is provided with means for setting the recovery means (42,62) in a mode in which a predetermined data processing indicated by the code recovered is performed.

13. Playback apparatus as claimed in any one of the claims 10, 11 or 12, characterized in that said transducer comprises a radiation sensitive detector (55) and means (53,58,60) for directing a radiation beam on the radiation sensitive detector via the record carrier.

14. Playback apparatus as claimed in claim 13, characterized by further having servo control means (57,59,64) for controlling the scanning in order to control at least one scanning parameter to a predetermined value on the basis of an error signal derived from a detection signal received from the radiation sensitive detector (55), the detection means (62) being arranged to detect the presence of the second variations of said second parameter on the basis said error signal.

15. Playback apparatus as claimed in claim 14, characterized in that said servo control means comprise tracking control means (59,60) for controlling the tracking on the basis of a tracking error signal derived from a detection signal received from said radiation sensitive detector (55).

16. Playback apparatus as claimed in claim 14, characterized in that the servo control means comprises scanning speed control means (64,50), the playback apparatus further comprising means (63) for data clock recovery, the detection means (62) comprises means for detecting variations in the clock frequency.

17. Playback apparatus as claimed in claim 14, characterized that the servo control means comprises focus control means (57,58) for maintaining a focal point of the scanning beam substantially in the plane in which the optically detectable areas and the intermediate areas are located on the basis of an focus error signal derived from a detection signal received from the radiation sensitive detector (55).

## Patentansprüche

1. Informationsrückgewinnungssystem mit: einem Aufzeichnungsträger (1), der Folgendes aufweist:
erste Änderungen eines ersten physikalischen Parameters des genannten Aufzeichnungsträgers, wobei die genannten ersten Änderungen auf dem genannten Aufzeichnungsträger aufgezeichneten Informationen entsprechen, und
zweite Änderungen eines zweiten physikalischen Parameters des genannten Aufzeichnungsträgers, wobei diese zweiten Änderungen ein Änderungsmuster aufweisen und die genannten zweiten Änderungen sich von dem genannten ersten physikalischen Parameter unterscheiden; und ein Abspielgerät mit:
einem Wandler (41; 52-55) zum Abtasten des genannten Aufzeichnungsträgers, wobei der Wandler ausgebildet ist, die genannten ersten Änderungen und zweiten Änderungen zu detektieren;
Detektionsmitteln (43; 62; 81) zur Detektion der zweiten Änderungen des zweiten physikalischen Parameters auf Basis eines vom Wandler empfangenen Detektionssignals und
Rückgewinnungsmitteln (42; 61), die mit dem genannten Wandler gekoppelt sind zum Rückgewinnen der Informationen aus den genannten ersten Änderungen,
dadurch gekennzeichnet, dass
die Detektionsmittel (43; 62; 81) ausgebildet sind zum Rückgewinnen eines von dem genannten Änderungsmuster repräsentierten Codes und
dass das Abspielgerät weiterhin Freigabemittel (62; 82) umfasst, die ausgebildet sind, die genannten Rückgewinnungsmittel freizugeben, um die Informationen in Abhängigkeit von dem genannten Code zurückzugewinnen.

2. Informationsrückgewinnungssystem nach Anspruch 1, dadurch gekennzeichnet, dass die zweiten Änderungen ein Modulationsmuster aufweisen, das einen Code repräsentiert, dass die Detektionsmittel Demodulationsmittel (81) zum Rückgewinnen des genannten Codes aus dem Detektionssignal und Mittel zum Aktivieren der Freigabemittel (62, 82) in Reaktion auf die Rückgewinnung des genannten Codes umfassen.

3. Informationsrückgewinnungssystem nach Anspruch 2, dadurch gekennzeichnet, dass die aufgezeichnete Information von einer Art ist, die mit Hilfe einer zuvor bestimmten Datenverarbeitung zurückgewonnen werden kann, wobei der von dem Modulationsmuster der zweiten Änderungen repräsentierte Code die Art der zur Rückgewinnung der Information zu verwendenden Datenverarbeitung angibt, wobei das Gerät mit Mitteln zum Setzen der Rückgewinnungsmittel in einen Modus versehen ist, in dem die von dem rückgewonnenen Code angegebene zuvor bestimmte Datenverarbeitung ausgeführt wird.

4. Informationsrückgewinnungssystem nach einem der vorhergehenden Ansprüche, dadurch gekennzeichnet, dass der genannte Aufzeichnungsträger (1) von einer optische lesbaren Art ist, in dem die Informationen als Muster aus entlang einer Spur (5) angeordneten optisch detektierbaren Marken (3) aufgezeichnet worden sind, und dass der genannte Wandler einen strahlungsempfindlichen Detektor (55) umfasst sowie Mittel (53, 58, 60), um ein Strahlenbündel über den Aufzeichnungsträger auf den strahlungsempfindlichen Detektor zu richten.

5. Informationsrückgewinnungssystem nach Anspruch 4, dadurch gekennzeichnet, dass das genannte Abspielgerät weiterhin Servosteuerungsmittel (57, 59, 64) zum Steuern des Abtastens mit Hilfe des Wandlers hat, um zumindest einen Abtastparameter auf Basis eines von dem strahlungsempfindlichen Detektor (55) empfangenen Detektionssignals, das von dem genannten zweiten physikalischen Parameter beeinflusst wird, auf einen zuvor bestimmten Wert zu regeln, wobei die Servosteuerungsmittel eine zuvor bestimmte Frequenzbandbreite haben, die genannten zweiten Änderungen des genannten zweiten physikalischen Parameters Änderungen des Detektionssignals bewirken, die ein Frequenzspektrum aufweisen, das außerhalb der Bandbreite von Servosteuerungsmitteln und außerhalb des Frequenzspektrums der von den ersten Änderungen des ersten physikalischen Parameters bewirkten Signaländerungen liegt.

6. Informationsrückgewinnungssystem nach Anspruch 5, dadurch gekennzeichnet, dass die genannten Servosteuerungsmittel Spurfolgesteuerungsmittel (60) umfassen, wobei die zweiten Änderungen des zweiten physikalischen Parameters Änderungen der Spurposition in einer Richtung quer zur Spurrichtung sind.

7. Informationsrückgewinnungssystem nach Anspruch 5, dadurch gekennzeichnet, dass das Servosteuerungsmittel Abtastgeschwindi gkeitssteuerungsmittel (64, 50) umfasst, wobei die zweiten Änderungen des zweiten physikalischen Parameters der Mittelwert der Länge der optisch detektierbaren Gebiete und der Zwischengebiete sind, wobei das Abspielgerät Mittel (63) zur Datentaktrückgewinnung umfasst, das Detektionsmittel (62) Mittel zum Detektieren von durch die Veränderung des genannten Mittelwertes bewirkten Änderungen der Taktfrequenz umfasst.

8. Informationsrückgewinnungssystem nach Anspruch 5, dadurch gekennzeichnet, dass das Servosteuerungsmittel Fokussteuerungsmittel (58) umfasst, um einen Fokus des Abtaststrahlenbündels nahezu in der Ebene zu halten, in der die optisch detektierbaren Gebiete und die Zwischengebiete liegen, wobei die zweiten Änderungen des zweiten physikalischen Parameters Änderungen der Position der genannten Ebene sind.

9. Informationsrückgewinnungssystem nach einem der Ansprüche 6, 7 oder 8, dadurch gekennzeichnet, dass der Aufzeichnungsträger eine Compact Disc ist, und dass die zweiten Änderungen des zweiten physikalischen Parameters zu einer Veränderung des Detektionssignals mit einer Frequenz von nahezu 22 kHz führen, falls die Spur mit einer Abtastgeschwindigkeit zwischen 1,2 bis 1,4 Meter pro Sekunde abgetastet wird.

10. Abspielgerät zum Rückgewinnen von Informationen aus einem Aufzeichnungsträger (1), der erste Änderungen eines ersten physikalischen Parameters des genannten Aufzeichnungsträgers aufweist, wobei die genannten ersten Änderungen auf dem genannten Aufzeichnungsträger aufgezeichneten Informationen entsprechen, sowie zweite Änderungen eines zweiten physikalischen Parameters des genannten Aufzeichnungsträgers, wobei dieser zweite physikalische Parameter sich von dem genannten ersten physikalischen Parameter unterscheidet, wobei das Abspielgerät umfasst:
einen Wandler (41; 52-55) zum Abtasten des genannten Aufzeichnungsträgers, wobei der Wandler ausgebildet ist, die genannten ersten Änderungen und zweiten Änderungen zu detektieren ;
Detektionsmittel (43; 62; 81) zur Detektion der zweiten Änderungen des zweiten physikalischen Parameters auf Basis eines vom Wandler empfangenen Detektionssignals
Rückgewinnungsmittel (42; 61), die mit dem genannten Wandler gekoppelt sind, zum Rückgewinnen der Informationen aus den genannten ersten Änderungen,
dadurch gekennzeichnet, dass
die Detektionsmittel (43; 62; 81) ausgebildet sind zum Rückgewinnen eines von einem Änderungsmuster der genannten zweiten Änderungen repräsentierten Codes und
dass das Abspielgerät weiterhin Freigabemittel (62; 82) umfasst, die ausgebildet sind, die genannten Rückgewinnungsmittel freizugeben, um die Informationen in Abhängigkeit von dem genannten Code zurückzugewinnen.

11. Abspielgerät nach Anspruch 10, dadurch gekennzeichnet, dass das Detektionsmittel Demodulationsmittel (81) zum Rückgewinnen eines Codes aus dem Detektionssignal und Mittel (62, 82) zum Aktivieren der Freigabemittel in Reaktion auf die Rückgewinnung des genannten Codes umfasst.

12. Abspielgerät nach Anspruch 11, dadurch gekennzeichnet, dass das Gerät mit Mitteln zum Setzen der Rückgewinnungsmittel (42, 62) in einen Modus versehen ist, in dem eine von dem rückgewonnenen Code angegebene, zuvor bestimmte Datenverarbeitung ausgeführt wird.

13. Abspielgerät nach einem der Ansprüche 10, 11 oder 12, dadurch gekennzeichnet, dass der genannte Wandler einen strahlungsempfindlichen Detektor (55) umfasst sowie Mittel (53, 58, 60), um ein Strahlenbündel über den Aufzeichnungsträger auf den strahlungsempfindlichen Detektor zu richten.

14. Abspielgerät nach Anspruch 13, dadurch gekennzeichnet, dass es weiterhin Servosteuerungsmittel (57, 59, 64) zum Steuern des Abtastens hat, um zumindest einen Abtastparameter auf Basis eines aus einem von dem strahlungsempfindlichen Detektor (55) empfangenen Detektionssignal abgeleiteten Fehlersignals auf einen zuvor bestimmten Wert zu regeln, wobei die Detektionsmittel zum Detektieren des Vorhandenseins der zweiten Änderungen des genannten zweiten Parameters auf Basis des genannten Fehlersignals ausgebildet sind.

15. Abspielgerät nach Anspruch 14, dadurch gekennzeichnet, dass die genannten Servosteuerungsmittel Spurfolgesteuerungsmittel (59, 60) umfassen, zum Steuern der Spurfolge auf Basis eines aus einem von dem strahlungsempfindlichen Detektor (55) empfangenen Detektionssignal abgeleiteten Spurfolgefehlersignals.

16. Abspielgerät nach Anspruch 14, dadurch gekennzeichnet, dass das Servosteuerungsmittel Abtastgeschwindigkeitssteuerungsmittel (64, 50) umfasst, wobei das Abspielgerät weiterhin Mittel (63) zur Datentaktrückgewinnung umfasst, und das Detektionsmittel (62) Mittel zum Detektieren von Änderungen der Taktfrequenz umfasst.

17. Abspielgerät nach Anspruch 14, dadurch gekennzeichnet, dass das Servosteuerungsmittel Fokussteuerungsmittel (57, 58) umfasst, um auf Basis eines aus einem von dem strahlungsempfindlichen Detektor (55) empfangenen Detektionssignal abgeleiteten Fokusfehlersignals einen Fokus des Abtaststrahlenbündels nahezu in der Ebene zu halten, in der die optisch detektierbaren Gebiete und die Zwischengebiete liegen.

## Revendications

1. Système de restitution d'informations, comprenant : un support d'enregistrement (1) présentant :
des premières variations d'un premier paramètre physique dudit support d'enregistrement, lesdites premières variations correspondant aux informations enregistrées sur ledit support d'enregistrement, et
des deuxièmes variations d'un deuxième paramètre physique dudit support d'enregistrement, lesdites deuxièmes variations présentant un motif de variation, et
ledit deuxième paramètre physique étant différent dudit premier paramètre physique, et
un appareil de reproduction comportant :
un transducteur (41; 52 à 55) pour balayer ledit support d'enregistrement, ledit transducteur étant adapté pour détecter lesdites premières variations et lesdites deuxièmes variations;
des moyens de détection (43; 62; 81) pour détecter les deuxièmes variations du deuxième paramètre physique sur la base d'un signal de détection reçu du transducteur, et
des moyens de restitution (42; 61) qui sont couplés audit transducteur pour restituer les informations desdites premières variations,
caractérisé en ce que
les moyens de détection (43; 62; 81) sont adaptés pour restituer un code représenté par ledit motif de variation, et
en ce que l'appareil de reproduction comprend en outre des moyens de validation (62; 82) agencés pour permettre auxdits moyens de restitution de restituer les informations en fonction dudit code.

2. Système de restitution d'informations suivant la revendication 1, caractérisé en ce que les deuxièmes variations présentent un motif de modulation représentant un code, en ce que les moyens de détection comprennent des moyens de démodulation (81) pour restituer ledit code à partir du signal de détection et des moyens pour activer les moyens de validation (62, 82) en réaction à la restitution dudit code.

3. Système de restitution d'informations suivant la revendication 2, caractérisé en ce que les informations enregistrées sont d'un type qui peut être restitué au moyen d'un traitement de données prédéterminé, le code représenté par le motif de modulation des deuxièmes variations indiquant le type de traitement de données à utiliser pour restituer les informations, l'appareil étant pourvu de moyens pour fixer les moyens de restitution sur un mode dans lequel le traitement de données prédéterminé indiqué par le code restitué est effectué.

4. Système de restitution d'informations suivant l'une des revendications précédentes, caractérisé en ce que ledit support d'enregistrement (1) est d'un type lisible optique, dans lequel les informations ont été enregistrées sous la forme de motifs de repères détectables par voie optique (3) agencés le long d'une piste (5), et en ce que ledit transducteur comprend un détecteur sensible au rayonnement (55) et des moyens (53, 58, 60) pour diriger un faisceau de rayonnement sur le détecteur sensible au rayonnement par l'intermédiaire du support d'enregistrement.

5. Système de restitution d'informations suivant la revendication 4, caractérisé en ce que ledit appareil de reproduction comporte en outre des moyens de servocommande (57, 59, 64) pour commander le balayage au moyen du transducteur afin de commander au moins un paramètre de balayage à une valeur prédéterminée sur la base d'un signal de détection reçu du détecteur sensible au rayonnement (55) et qui est affecté par ledit deuxième paramètre physique, lesquels moyens de servocommande comportent une largeur de bande prédéterminée, lesdites deuxièmes variations dudit deuxième paramètre physique causent des variations dans le signal de détection qui présentent un spectre des fréquences qui se trouve en dehors de la largeur de bande des moyens de servocommande et en dehors du spectre des fréquences des variations de signal causées par les premières variations du premier paramètre physique.

6. Système de restitution d'informations suivant la revendication 5, caractérisé en ce que lesdits moyens de servocommande comprennent des moyens de commande de poursuite (60), les deuxièmes variations du deuxième paramètre physique étant des variations de la position de piste dans une direction transversale à la direction de piste.

7. Système de restitution d'informations suivant la revendication 5, caractérisé en ce que les moyens de servocommande comprennent des moyens de commande de vitesse de balayage (64, 50), les deuxièmes variations du deuxième paramètre physique étant la valeur moyenne de la longueur des zones détectables par voie optique et des zones intermédiaires, l'appareil de reproduction comprenant des moyens (63) pour la restitution de l'horloge de données, les moyens de détection (62) comprennent des moyens pour détecter des variations dans la fréquence d'horloge causées par la variation de ladite valeur moyenne.

8. Système de restitution d'informations suivant la revendication 5, caractérisé en ce que les moyens de servocommande comprennent des moyens de commande de focalisation (58) pour maintenir un foyer du faisceau de balayage pratiquement dans le plan dans lequel se trouvent les zones détectables par voie optique et les zones intermédiaires, les deuxièmes variations du deuxième paramètre physique étant des variations de la position dudit plan.

9. Système de restitution d'informations suivant l'une des revendications 6, 7 ou 8, caractérisé en ce que le support d'enregistrement est un Compact Disc, et en ce que les deuxièmes variations du deuxième paramètre physique donnent une variation du signal de détection à une fréquence correspondant pratiquement à 22 kHz dans l'éventualité où la piste est balayée à une vitesse de balayage comprise entre 1,2 et 1,4 mètre par seconde.

10. Appareil de reproduction pour restituer des informations à partir d'un support d'enregistrement (1) présentant des premières variations d'un premier paramètre physique dudit support d'enregistrement, lesdites premières variations correspondant à des informations enregistrées sur ledit support d'enregistrement, et des deuxièmes variations d'un deuxième paramètre physique dudit support d'enregistrement, ledit deuxième paramètre physique étant différent dudit premier paramètre physique, l'appareil de reproduction comprenant :
un transducteur (41; 52 à 55) pour balayer ledit support d'enregistrement, ledit transducteur étant adapté pour détecter lesdites premières variations et lesdites deuxièmes variations;
des moyens de détection (43; 62; 81) pour détecter les deuxièmes variations du deuxième paramètre physique sur la base d'un signal de détection reçu du transducteur, et
des moyens de restitution (42; 61) qui sont couplés audit transducteur pour restituer les informations desdites premières variations sont prévus,
caractérisé en ce que
les moyens de détection (43; 62; 81) sont adaptés pour restituer un code représenté par un motif de variation desdites deuxièmes variations, et
en ce que l'appareil de reproduction comprend en outre des moyens de validation (62; 82) agencés pour permettre auxdits moyens de restitution de restituer les informations en fonction dudit code.

11. Appareil de reproduction suivant la revendication 10, caractérisé en ce que les moyens de détection comprennent des moyens de démodulation (81) pour restituer un code à partir du signal de détection et des moyens (62, 82) pour activer les moyens de validation en réaction à la restitution dudit code.

12. Appareil de reproduction suivant la revendication 11, caractérisé en ce que l'appareil est pourvu de moyens pour fixer les moyens de restitution (42, 62) sur un mode dans lequel un traitement de données prédéterminé indiqué par le code restitué est effectué.

13. Appareil de reproduction suivant l'une des revendications 10, 11 ou 12, caractérisé en ce que ledit transducteur comprend un détecteur sensible au rayonnement (55) et des moyens (53, 58, 60) pour diriger un faisceau de rayonnement vers le détecteur sensible au rayonnement par l'intermédiaire du support d'enregistrement.

14. Appareil de reproduction suivant la revendication 13, caractérisé en outre en ce qu'il comprend des moyens de servocommande (57, 59, 64) pour commander le balayage afin de commander au moins un paramètre de balayage sur une valeur prédéterminée sur la base d'un signal d'erreur dérivé d'un signal de détection reçu du détecteur sensible au rayonnement (55), les moyens de détection (62) étant agencés pour détecter la présence des deuxièmes variations dudit deuxième paramètre sur la base dudit signal d'erreur.

15. Appareil de reproduction suivant la revendication 14, caractérisé en ce que lesdits moyens de servocommande comprennent des moyens de commande de poursuite (59, 60) pour commander la poursuite sur la base d'un signal d'erreur de poursuite dérivé d'un signal de détection reçu dudit détecteur sensible au rayonnement (55).

16. Appareil de reproduction suivant la revendication 14, caractérisé en ce que les moyens de servocommande comprennent des moyens de commande de vitesse de balayage (64, 50), l'appareil de reproduction comprenant en outre des moyens (63) pour la restitution d'horloge de données, les moyens de détection (62) comprennent des moyens pour détecter des variations dans la fréquence d'horloge.

17. Appareil de reproduction suivant la revendication 14, caractérisé en ce que le moyen de servocommande comprend des moyens de commande de focalisation (57, 58) pour maintenir un foyer du faisceau de balayage pratiquement dans le plan dans lequel se trouvent les zones détectables par voie optique et les zones intermédiaires sur la base d'un signal d'erreur de focalisation dérivé d'un signal de détection reçu du détecteur sensible au rayonnement (55).
